# EUROPÄISCHE PATENTSCHRIFT

(11) **EP 3 259 164 B1**
(45) Veröffentlichungstag und Bekanntmachung des Hinweises auf die Patenterteilung: **26.04.2023**
(21) Anmeldenummer: 16705057.4
(22) Anmeldetag: 05.02.2016
(51) Int. Cl.: B60W 50/00

(54) **KONFIGURATION EINER FAHRVERHALTENSSTEUERUNG EINES KRAFTFAHRZEUGS**
CONFIGURING THE HANDLING CONTROL OF A MOTOR VEHICLE
CONFIGURATION D'UNE COMMANDE DE COMPORTEMENT DE CONDUITE D'UN VÉHICULE À MOTEUR

(30) Priorität: 17.02.2015 DE 102015202820
(43) Veröffentlichungstag der Anmeldung: 27.12.2017
(73) Patentinhaber: Bayerische Motoren Werke Aktiengesellschaft, 80809 München (DE)
(72) Erfinder: COMULADA SIMPSON, Eduard, 80807 München (DE); STRASSBERGER, Markus, 85456 Wartenberg (DE); FINDELI, Marc, 80636 München (DE)
(86) Internationale Anmeldenummer: PCT/EP2016/052480
(87) Internationale Veröffentlichungsnummer: WO 2016/131666

(56) Entgegenhaltungen:
- WO-A1-2013/130036
- US-A1- 2010 222 939
- US-B1- 6 505 780

## Beschreibung

Die vorliegende Erfindung betrifft die Konfiguration einer Fahrverhaltenssteuerung an Bord eines Kraftfahrzeugs.

Ein Kraftfahrzeug umfasst eine Fahrverhaltenssteuerung, die einen Fahrassistenten oder eine Fahrdynamiksteuerung umfassen kann. Der Fahrassistent kann einen Fahrer bei der Führung des Kraftfahrzeugs unterstützen, beispielsweise durch Ausgeben einer Warnung, wenn die Gefahr besteht, dass das Kraftfahrzeug eine Fahrspur verlässt. Die Fahrdynamiksteuerung beeinflusst die Art der Bewegung des Kraftfahrzeugs und kann beispielsweise eine aktive Längs- oder Quersteuerung oder auch eine Abstimmung eines Fahrwerks beeinflussen.

Ein modernes Kraftfahrzeug kann mehrere Fahrverhaltenssteuerungen umfassen, die jeweils mehrere Einstellungsmöglichkeiten unterstützen können, sodass das Fahrverhalten des Kraftfahrzeugs durch eine kaum überschaubare Anzahl von Konfigurationen beeinflusst werden kann. Mit den üblichen Bedienelementen an Bord eines Kraftfahrzeugs ist ein Fahrer jedoch üblicherweise nicht in der Lage, eine an eine Fahrsituation angepasste Konfiguration zu erstellen bzw. entsprechend anzupassen.

US 2013 197674 betrifft eine Technik zum Übernehmen von Parametern eines ersten Kraftfahrzeugs in ein zweites Kraftfahrzeug. Die Parameter werden an Bord des ersten Kraftfahrzeugs automatisch abgetastet und es wird versucht, entsprechende Parameter an Bord des zweiten Kraftfahrzeugs automatisch einzustellen.

DE 10 2012 216 919 A1 betrifft ein Verfahren zum Steuern eines Fahrzeugcomputers mittels eines Mobiltelefons. Mittels einer auf dem Mobiltelefon ablaufenden Applikation kann ein Benutzer einen Steuerbefehl an das Kraftfahrzeug eingeben.

DE 10 2010 009 759 A1 betrifft die Konfiguration einer Steuereinheit eines Fahrzeugs. Dabei wird eine Konfigurationsdatei an die Steuereinheit übermittelt, wobei in der Konfigurationsdatei mindestens eine Regel hinterlegt ist, die das Ausführen einer vorbestimmten Aktion steuert. Die beschriebenen Aktionen betreffen im Wesentlichen Komfort-Funktionen wie die Einstellung einer Klimaanlage, das Öffnen eines Verdecks oder eine automatisierte Internet-Kommunikation. Die Konfigurationsdatei kann aus einer beliebigen Quelle stammen, wobei eine Fehlkonfiguration oder ein Missbrauch nicht aktiv verhindert werden.

WO 2013/130036 A1 beschreibt ein Verfahren und ein System zur Kraftfahrzeugpersonalisierung. Gemäß einem Ausführungsbeispiel wird mindestens eine anpassbare Einstellung einer Vielzahl von Konfigurationseinstellungen die mit dem Fahrzeug verbunden sind, bestimmt. Nach dem Empfang einer Anfrage der Personalisierung von mindestens einer Konfigurationseinstellung werden ein Benutzerprofil und bevorzugte Einstellungsinformationen abgerufen. Weiterhin wird mindestens eine anpassbare Einstellung des Fahrzeugs basierend auf den bevorzugten Einstellungen der Benutzerprofilinformationen eingestellt.

In der US 2010/222939 A1 werden Verfahren und Systeme zur Fernsteuerung der Handhabung eines Fahrzeuges beschrieben. Gemäß einer Ausführungsform wird ein sogenanntes Lern-Element verwendet. Hierbei werden Einstellungen, die von dem Nutzer in der Vergangenheit eingestellt wurden, gespeichert und diese werden eingestellt. Solche Einstellungen können auch zu Unterklassen zusammengefasst werden.

In der US 6,505,780 B1 wird die Personalisierung von Fahrzeugeinstellungen beschrieben. Hierbei wird ein RFID Tag verwendet, auf dem persönliche Einstellungen gespeichert sind. Die Profilinformationen eines Fahrers werden hierbei auf das Fahrzeug heruntergeladen und diese werden verwendet, um die Fahrzeugpräferenzen des Fahrers einzustellen.

Der Erfindung liegt die Aufgabe zugrunde, eine Vorrichtung, ein System und ein Verfahren zum verbesserten Konfigurieren einer Fahrverhaltenssteuerung an Bord eines Kraftfahrzeugs bereitzustellen. Die Erfindung löst diese Aufgabe mittels der Gegenstände der unabhängigen Ansprüche. Unteransprüche geben bevorzugte Ausführungsformen wieder.

Der Erfindung liegt die Erkenntnis zu Grunde, dass eine Abstimmung eines oder mehrerer Fahrassistenten und/oder Fahrdynamiksteuerungen eines Kraftfahrzeugs im Allgemeinen zu komplex ist, um sie mit den an Bord des Kraftfahrzeugs üblicherweise vorhandenen Ein- und Ausgabemitteln und in angemessener Zeit detailliert durchführen zu können.

Zur Lösung der Aufgabe wird eine sogenannte Autonome Konfiguration von Einstellbaren Umgebungen (AKEU) vorgeschlagen. Hierbei wird eine integrierte zentrale Lösung beschrieben, um aktive und automatische Konfigurationen ins Fahrzeug zu übernehmen. In einer Ausführungsform unterstützt die vorgeschlagene Technik eine Schnittstelle zwischen einem Smartphone und dem Kraftfahrzeug sowie eine Schnittstelle zwischen dem Smartphone und einem Server, welcher eine weitere Schnittstelle zum Kraftfahrzeug hat. Dadurch kann stets eine sichere Datenverbindung gewährleistet sein. Ein Benutzer kann außerhalb seines Kraftfahrzeugs dieses über ein mobiles Gerät (z.B. Smartphone, Tablet, u.Ä.) sowie einen Rechner mit Internet konfigurieren. Über einen Server werden die jeweiligen Einstellungen ausgewählt, verwaltet und abgespeichert. Ferner ist es möglich, die Konfigurationen statt auf dem Server, lokal auf dem mobilen Gerät zu speichern. Dafür muss eine Synchronisation zu einem späteren Zeitpunkt stattfinden.

Zusätzlich zu den eigentlichen Einstellungen besitzt der Kraftfahrzeugführer die Möglichkeit, Bedingungen zu definieren, um die automatische Aktivierung im Kraftfahrzeug zu starten. Solche Bedingungen sind beispielsweise Uhrzeiten, Tagesabhängigkeiten, Orte oder komplexere umweltrelevante Veränderungen oder Zustände wie Regen oder Stau. Dabei ist es möglich die Konfigurationen mit Prioritäten zu versehen, um eine einfachere und saubere Arbitrierung im Kraftfahrzeug bei möglichen überlappenden Bedingungen zu gewährleisten. Zur Gewährleistung der Sicherheit muss sich der Nutzer in einer Ausführungsform zunächst gegenüber dem Kraftfahrzeug identifizieren. Dies kann mit einer PIN, einer NFC-Karte, mittels Gesichtserkennung oder auf eine ähnliche Weise erfolgen. Anschließend kann das Kraftfahrzeug über den Server die persönlichen Konfigurationen des Nutzers überprüfen bzw. herunterladen. Zu diesem Zeitpunkt kann eine "Constraint Engine" des Servers eine für das Kraftfahrzeug nicht umsetzbaren Konfigurationen (beispielsweise fehlende Sonderausstattungen bzw. oder fehlende Software) ausfiltern. Der Funktionsumfang der Constraint Engine kann auch im Kraftfahrzeug selbst stattfinden.

Danach werden die Daten durch eine "Intelligent Rule Engine" übernommen und alle Konfigurationen anhand der voreingestellten Prioritäten und Bedingungen geprüft. Die Konfiguration, deren zugeordnete Bedingung erfüllt ist und deren Priorität ausreicht, wird übernommen oder dem Fahrer über eine Anzeigevorrichtung zur Übernahme empfohlen. Die Intelligent Rule Engine verfügt in einer Ausführungsform über die Möglichkeit automatisch Bedingungen sowie Ereignisse abzuspeichern und Konfigurationen autonom zu generieren. Die generierten Konfigurationen können zusätzlich dem Nutzer empfohlen und durch diesen geprüft werden. Dabei sollen die im Kraftfahrzeug generierten Konfigurationen jederzeit manuell gelöscht werden können.

Die AKEU ermöglicht einem Fahrer, beispielsweise von Zuhause aus, bestimmte Einstellungen für eine Fahrverhaltenssteuerung seines Kraftfahrzeuges vorzunehmen und das Kraftfahrzeug auf seine individuellen Bedürfnisse abzustimmen. Offboard kann durch das Portal ein intensiver Dialog durch Ausstattungen, Produktempfehlungen und individuelle Kraftfahrzeugmodi realisiert werden. Nicht nur das Einstellen von Parametern einer Fahrverhaltenssteuerung, beispielsweise durch das Setzen von Fahrdynamikwerten, ist mit AKEU auch außerhalb des Kraftfahrzeuges möglich. Durch die Constraint Engine kann darüber hinaus auch gewährleistet werden, dass Konfigurationen, die beispielsweise aufgrund von fehlender Ausstattung oder fehlender Rechte nicht in das Kraftfahrzeug übernommen werden können, exkludiert sind. Die vorliegende Technik kann es dem Nutzer weiter erlauben, seine Einstellungen in mehrere Kraftfahrzeuge (Privat, Dienstfahrzeuge, DriveNow) unkompliziert und ohne Zeitverlust vor der Fahrt zu portieren. Dabei können insbesondere Kraftfahrzeuge eines vorbestimmten Herstellers unterstützt werden.

Es kann eine aktive Steuerung von allen möglichen Einstellungen mit der AKEU ermöglicht sein. Unter aktiver Steuerung versteht man die Möglichkeit, über die Intelligent Rule Engine Bedingungen zu definieren um bestimmte Konfigurationen zu übernehmen. Des Weiteren kann die Intelligent Rule Engine neue Bedingungen aus den zur Verfügung stehenden Umgebungsdaten erstellen und diese autonom an Benutzer weiterleiten, um eine für die Situation passende Konfiguration zu empfehlen.

Durch das Beziehen einer Konfiguration von einer zentralen Einrichtung bzw. einer zentralen Komponente wie einem Server kann das Verfügbarmachen und Aktivieren einer passenden Konfiguration eines oder mehrerer fahrdynamischer Parameter deutlich vereinfacht werden. Eine Richtigkeit oder Angemessenheit der Konfiguration kann durch die zentrale Komponente verbessert sicher gestellt werden. Außerdem ist es vereinfacht möglich, das Aktivieren einer Konfiguration an eine Bedingung im Bereich des Kraftfahrzeugs zu binden. Ein Fahrer des Kraftfahrzeugs kann so bei der Auswahl und Aktivierung der jeweils passenden Konfiguration unterstützt sein und das Fahrverhalten des Kraftfahrzeugs kann verbessert an eine Betriebssituation des Kraftfahrzeugs angepasst sein.

Nach einem ersten Aspekt umfasst eine Vorrichtung zur Konfiguration eines Kraftfahrzeugs eine Kommunikationseinrichtung zum Empfangen einer Konfiguration von einer zentralen Komponente, wobei die Konfiguration wenigstens einen Parameter umfasst, der auf eine Fahrverhaltenssteuerung des Kraftfahrzeugs bezogen ist, und eine Verarbeitungseinrichtung, die dazu eingerichtet ist, die Konfiguration durch Einstellen wenigstens eines Parameters der Konfiguration am Kraftfahrzeug zu aktivieren. Dabei sind mehrere Konfigurationen vorgesehen, denen jeweils eine Bedingung zugeordnet ist, und die Verarbeitungseinrichtung ist dazu eingerichtet, eine Konfiguration mit erfüllter Bedingung zu aktivieren und mehrere Konfigurationen mit jeweils erfüllter Bedingung zu aktivieren. Die Vorrichtung ist dadurch gekennzeichnet, dass jeder Konfiguration eine Priorität zugeordnet ist und die Verarbeitungseinrichtung dazu eingerichtet ist, die Aktivierung der Konfigurationen auf der Basis der Priorität durchzuführen.

Dadurch wird es möglich, die Fahrverhaltenssteuerung des Kraftfahrzeugs auf der Basis einer Konfiguration anzupassen, die von außerhalb des Kraftfahrzeugs empfangen wird. Vor dem Empfangen kann die Konfiguration entsprechend bearbeitet worden sein, alternativ auf automatische oder manuelle Weise. Beispielsweise kann die Konfiguration durch einen Fahrer des Kraftfahrzeugs verfasst worden sein, bevor er an Bord des Kraftfahrzeugs geht. Dabei kann die zentrale Komponente von dritter Seite verwaltet werden, sodass beispielsweise eine Zertifizierung, eine Validierung oder eine Authentifizierung der beteiligten Elemente und Komponenten durchgesetzt werden kann. Ein Missbrauch oder eine Fehlkonfiguration des Kraftfahrzeugs kann dadurch unterbunden werden. Die Kommunikation zwischen dem Kraftfahrzeug und der zentralen Komponente kann einfach und sicher ausgeführt werden, wenn eine Übernahme einer Konfiguration aus einer anderen Quelle als der zentralen Komponente nicht vorgesehen ist.

Die Fahrverhaltenssteuerung kann unterschiedliche Aufgaben an Bord des Kraftfahrzeugs erfüllen, die auf die Bewegung des Kraftfahrzeugs bezogen sind. Insbesondere kann die Fahrverhaltenssteuerung einen Fahrassistenten (auch: Fahrerassistenten) oder eine Fahrdynamiksteuerung umfassen.

Beispielsweise kann ein Fahrassistent dazu eingerichtet sein, einen vorbestimmten, gegebenenfalls geschwindigkeitsabhängigen Abstand zu einem vorausfahrenden Kraftfahrzeug einzuhalten. Ein anderer Fahrassistent kann dazu eingerichtet sein, das Kraftfahrzeug in einer Fahrspur zu halten. Ein dritter Fahrassistent kann eine Aufmerksamkeit des Fahrers überwachen und diesen bei drohender Unaufmerksamkeit oder Müdigkeit alarmieren.

Die Fahrdynamiksteuerung betrifft insbesondere Aspekte des Fahrwerks oder des Antriebsstrangs und kann besonders schwierig an Bord des Kraftfahrzeugs zu konfigurieren sein, da sie unmittelbaren Einfluss auf das Fahrverhalten haben kann, sodass bei Änderungen während des Betriebs des Kraftfahrzeugs eine Unfallgefahr erhöht sein kann. Beispiele für eine Fahrdynamiksteuerung umfassen eine Beeinflussung des Fahrwerks oder des Antriebsstrangs.

Mehrere unterschiedliche Parameter der Fahrverhaltenssteuerung werden üblicherweise in einer Konfiguration zusammengefasst, die durch einen Fahrer des Kraftfahrzeugs gewählt werden kann. Beispielsweise kann der Fahrer zwischen einer sportlichen, einer ökonomischen und einer komfortablen Konfiguration wählen, wofür ein entsprechendes Bedienelement an Bord des Kraftfahrzeugs vorgesehen ist.

Die Konfiguration kann eine Vielzahl von Parametern umfassen, die auf die Fahrverhaltenssteuerung, insbesondere die Steuerung der Fahrdynamik des Kraftfahrzeugs, bezogen sind. Die auf die Fahrdynamik bezogenen Parameter können insbesondere die Längssteuerung, die Quersteuerung oder die Abstimmung des Fahrwerks des Kraftfahrzeugs betreffen. In der Längssteuerung kann ein Parameter bevorzugter Weise die Steuerung eines Verbrennungsmotors oder eines automatischen oder teilautomatischen Getriebes betreffen. Der Antriebsmotor kann etwa bezüglich seiner maximal zur Verfügung gestellten Leistung, seines Ansprechverhaltens oder einer maximalen Drehzahl mittels entsprechender Parameter gesteuert werden. Bezüglich des Getriebes kann beispielsweise eine eingelegte Gangstufe, ein Schaltpunkt, eine maximale oder eine minimale Drehzahl, eine Verteilung von Drehmoment an unterschiedliche Antriebsräder oder ein anderer Parameter veränderbar sein. In der Quersteuerung kann der Parameter beispielsweise einen Lenkwinkel, einen Lenkwiderstand, eine Lenkuntersetzung, einen maximalen Lenkwinkel oder eine Lenkkraftverstärkung betreffen. Das Fahrwerk kann insbesondere die Federung oder die Dämpfung eines Rads des Kraftfahrzeugs umfassen. Ein diesbezüglicher Parameter kann einen maximalen Federweg, eine Federhärte, eine Federvorspannung, einen Dämpfungsgrad in der Zug- oder Druckstufe oder eine Fahrwerksgeometrie betreffen.

Weiter können die Parameter die Art beeinflussen, wie die Fahrverhaltenssteuerung mit dem Fahrer in Verbindung tritt. Beispielsweise können Warnschwellen oder Ausgabearten beeinflusst werden, Dabei können auch Parameter mehrerer Fahrverhaltenssteuerungen gleichzeitig beeinflusst werden, um den Fahrer verbessert zu unterstützen. Wird beispielsweise eine gefährliche Fahrstrecke befahren, so können ein Warnzeitpunkt, eine Warnschwelle, die Intensität einer Ausgabe (optisch, akustisch oder haptisch), ein Zeitpunkt oder die Art eines Eingriffs in die Fahrzeugführung durch eine Konfiguration zueinander passend verändert werden. Der Fahrer kann eine Konfiguration auch manuell aktivieren, beispielsweise eine sicherheitsorientierte Konfiguration, wenn er sich müde fühlt.

Durch das Zusammenstellen von mehreren Parametern können Konfigurationen gebildet werden, die beispielsweise einem vorbestimmten Anwendungszweck des Kraftfahrzeugs dienen. So kann beispielsweise eine Konfiguration für einen Betrieb des Kraftfahrzeugs in einem Verkehrsstau oder eine Konfiguration zum besonders leisen Fahren in einer verkehrsberuhigten Zone erstellt werden.

Erfindungsgemäß sind mehrere Konfigurationen vorgesehen, denen jeweils eine Bedingung zugeordnet ist, wobei die Verarbeitungseinrichtung dazu eingerichtet ist, eine Konfiguration mit erfüllter Bedingung zu aktivieren.

Dadurch kann das Aktivieren einer Konfiguration automatisiert werden. Ein Fahrer des Kraftfahrzeugs muss dann die Aktivierung weder steuern noch ihr zustimmen, um eine verbesserte Fahrleistung des Kraftfahrzeugs zu ermöglichen. Gleichzeitig kann das Aktivieren einer ungeeigneten, insbesondere manuell ausgewählten Konfiguration unterbunden werden. Liegt beispielsweise eine Glatteissituation vor, so kann das Aktivieren einer sportlichen Konfiguration der Fahrdynamikwerte verhindert werden.

Eine Bedingung kann praktisch jeden an Bord des Kraftfahrzeugs abtastbaren technischen Parameter umfassen. Beispielsweise kann die Bedingung eine Uhrzeit, ein Datum, einen Aufenthaltsort des Kraftfahrzeugs, eine Straßenklasse, eine Geschwindigkeit, Lichtverhältnisse, Wetterverhältnisse, eine Verkehrssituation, einen Aufmerksamkeitsgrad des Fahrers oder andere Parameter betreffen. Die in die Bedingung einfließenden Parameter können insbesondere mittels Sensoren abgetastet werden, die an Bord des Kraftfahrzeugs vorgesehen sind. Diese Sensoren können insbesondere ein Umfeld oder einen Innenraum des Kraftfahrzeugs abtasten.

Die Bedingung kann auch eine logische Verknüpfung mehrerer Teilbedingungen umfassen. Die Teilbedingungen können beispielsweise mit den Methoden der booleschen Algebra miteinander verknüpft werden, insbesondere mittels der Operatoren UND, ODER und NICHT. Eine Klammersetzung kann ebenfalls unterstützt werden, um praktisch beliebig komplexe Konstrukte von Teilbedingungen zu bilden, die letztlich eine binäre Aussage im Sinn von wahr oder falsch erlauben.

Erfindungsgemäß ist die Verarbeitungseinrichtung dazu eingerichtet, mehrere Konfigurationen mit jeweils erfüllter Bedingung zu aktivieren. Die Konfigurationen können sich dabei auf unterschiedliche Parameter des Kraftfahrzeugs beziehen, sodass mehr als eine Konfiguration gleichzeitig aktiviert sein kann. Beispielsweise kann eine Konfiguration den Antriebsstrang und eine andere das Fahrwerk betreffen. Jeder Konfiguration kann eine eigene Bedingung zugeordnet sein. Unterschiedliche Aspekte der Fahrdynamik des Kraftfahrzeugs können so getrennt voneinander konfiguriert werden.

Erfindungsgemäß ist jeder Konfiguration eine Priorität zugeordnet, wobei die Verarbeitungseinrichtung dazu eingerichtet ist, die Aktivierung der Konfigurationen auf der Basis der Priorität durchzuführen.

Die Priorität kann dazu dienen, Konflikte aufzulösen, wenn zwei Konfigurationen aktiviert werden sollen, die sich in unterschiedlicher Weise auf den gleichen Parameter beziehen.

In einer ersten Variante wird nur diejenige Konfiguration mit der höchsten Priorität aktiviert, während alle anderen Konfigurationen nicht angewandt werden. In einer anderen Variante wird zunächst die Konfiguration mit der höchsten Priorität aktiviert. Die Konfiguration mit der weniger hohen Priorität wird dann nur noch auf die Parameter bezogen, die durch die erste Konfiguration nicht geändert wurden. In entsprechender Weise können beliebig viele Konfigurationen auf der Basis zugeordneter Prioritäten am Kraftfahrzeug aktiviert werden.

Die Verarbeitungseinrichtung kann dazu eingerichtet sein, einen Fahrzustand des Kraftfahrzeugs abzutasten, eine Korrelation zwischen dem Fahrzustand und einer aktivierten Konfiguration zu erfassen und das Aktivieren der Konfiguration bei Vorliegen eines vergleichbaren Fahrzustands zu ermöglichen. Anders ausgedrückt kann an Bord des Kraftfahrzeugs erfasst werden, welche Konfiguration häufig mit welchen Bedingungen zusammenfällt. Wird eine Korrelation erkannt, kann bei Vorliegen passender Bedingungen die Aktivierung der zugehörigen Konfiguration vorgeschlagen oder veranlasst werden. Dadurch kann das Kraftfahrzeug die Vorlieben oder Gewohnheiten seines Fahrers erlernen und ihn bei der Konfiguration der Fahrverhaltenssteuerung unterstützen.

Wird beispielsweise erfasst, dass ein bestimmter Weg einer Pendelfahrt regelmäßig mit einer bestimmten Konfiguration befahren wird, so kann die automatische Aktivierung dieser Konfiguration angeboten werden, wenn das Kraftfahrzeug eine solche Pendelfahrt beginnt. In einem weiteren Beispiel kann ein Geschwindigkeitsassistent (ACC: "adaptive cruise control") durch den Fahrer üblicherweise auf einem bestimmten Abschnitt der Pendelfahrt aktiviert werden, gegebenenfalls auch in Abhängigkeit einer Verkehrsdichte. Nach dem Erfassen dieses Zusammenhangs kann das Aktivieren des ACC auf diesem Abschnitt automatisiert angeboten oder durchgeführt werden.

In einer weiteren Ausführungsform kann die Vorrichtung auch dazu eingerichtet sein, eine Anpassung einer zu aktivierenden Konfiguration an eine Fähigkeit des Kraftfahrzeugs oder an eine Berechtigung eines Benutzers durchzuführen. Beispielsweise kann die Konfiguration einen Parameter umfassen, der nicht oder nicht in der gewünschten Bandbreite am vorliegenden Kraftfahrzeug einstellbar ist. Eine Kraftverteilung zwischen Vorderrädern und Hinterrädern kann beispielsweise nicht eingestellt werden, wenn das Kraftfahrzeug über keinen Allradantrieb verfügt. Die Berechtigung eines Benutzers, einen Parameter zu beeinflussen, kann in einer Ausführungsform durch eine Person, insbesondere einen Eigentümer des Kraftfahrzeugs, vorgegeben werden, sodass dediziert gesteuert werden kann, wer das Kraftfahrzeug in welcher Weise benutzen kann. Ein Verbot der Veränderung kann auch beispielsweise von dritter Stelle vorgegeben sein, insbesondere seitens der zentralen Komponente. So kann das Löschen einer maximalen Höchstgeschwindigkeit oder das Abschalten einer Lambdasonde zwar technisch möglich, aber für einen Benutzer des Kraftfahrzeugs nicht erlaubt sein. Eine allgemeine Betriebssicherheit des Kraftfahrzeugs kann dadurch gewahrt bleiben. Das Kraftfahrzeug und seine Insassen können vor Fehlbenutzung, unangemessener Handhabung und übermäßigem Verschleiß geschützt werden.

Nach einem zweiten Aspekt umfasst ein System die oben beschriebene Vorrichtung und die zentrale Komponente, wobei die zentrale Komponente eine Speichereinrichtung zur Ablage von Konfigurationen für das Kraftfahrzeug und eine Kommunikationseinrichtung zur Kommunikation mit dem Kraftfahrzeug umfasst.

Die Abstimmung der zentralen Komponente mit dem Kraftfahrzeug und insbesondere die Absicherung der Kommunikation zwischen den beiden Elementen erlaubt es, die Fahrdynamik des Kraftfahrzeugs auf eine Weise konfigurierbar zu machen, die für einen Benutzer nachvollziehbar und gleichzeitig für den Betrieb des Kraftfahrzeugs gefahrlos ist. Dies gilt insbesondere dann, wenn der Betreiber der zentralen Komponente gleichzeitig für die Funktionalität der Vorrichtung an Bord des Kraftfahrzeugs verantwortlich ist.

In einer Ausführungsform umfasst die zentrale Einrichtung eine weitere Kommunikationseinrichtung und ist dazu eingerichtet, auf der Basis von mittels der weiteren Kommunikationseinrichtung empfangenen Eingaben eine abgelegte Konfiguration zu erstellen oder zu verändern. Die weitere Kommunikationseinrichtung kann insbesondere eine Verbindung mit einem Datennetzwerk wie dem Internet oder einem Mobilfunknetz umfassen. Beispielsweise können ein Eigentümer oder ein Benutzer des Kraftfahrzeugs mittels eines festen oder mobilen Computers über die weitere Kommunikationseinrichtung auf eine Konfiguration zugreifen und diese für einen späteren Einsatz an Bord des Kraftfahrzeugs vorbereiten. Eine Benutzerschnittstelle zum Bearbeiten der Konfiguration kann durch eine entsprechende Software oder seitens der zentralen Einrichtung vorgegeben sein. So ist eine Bedienperson bei der Manipulation der Konfiguration nicht an die Beschränkungen bezüglich Eingabe, Ausgabe und Verarbeitungskapazität an Bord des Kraftfahrzeugs eingeschränkt. Das Erstellen bzw. Manipulieren der Konfiguration kann dadurch leichter oder schneller vonstatten gehen. Ein maximal handhabbarer Komplexitätsgrad einer Konfiguration kann erhöht sein.

In noch einer weiteren Ausführungsform ist die zentrale Komponente dazu eingerichtet, eine Anpassung einer zu aktivierenden Konfiguration an eine Fähigkeit des Kraftfahrzeugs oder an eine Berechtigung eines Benutzers durchzuführen.

Diese Anpassung wird üblicherweise nur einmal durchgeführt, nämlich entweder seitens der zentralen Komponente oder seitens der Vorrichtung an Bord des Kraftfahrzeugs.

Ein Verfahren zum Konfigurieren eines Kraftfahrzeugs umfasst Schritte des Übertragens einer Konfiguration von einer zentralen Komponente auf das Kraftfahrzeug, wobei die Konfiguration wenigstens einen Parameter umfasst, der auf die Fahrdynamik des Kraftfahrzeugs bezogen ist, und des Aktivierens der Konfiguration durch Einstellen wenigstens eines Parameters der Konfiguration im Kraftfahrzeug. Dabei sind mehrere Konfigurationen vorgesehen, denen jeweils eine Bedingung zugeordnet ist, wobei das Verfahren weiterhin die Schritte umfasst, eine Konfiguration mit erfüllter Bedingung zu aktivieren und mehrere Konfigurationen mit jeweils erfüllter Bedingung zu aktivieren. Das Verfahren ist dadurch gekennzeichnet, dass jeder Konfiguration eine Priorität zugeordnet ist und dass die Aktivierung der Konfigurationen auf der Basis der Priorität durchgeführt wird.

Die Erfindung wird im Folgenden erneut unter Bezugnahme auf die beiliegenden Figuren genauer beschrieben, in denen:
- Fig. 1: ein System zur Konfiguration von Fahrdynamikwerten eines Kraftfahrzeugs;
- Fig. 2: eine Vorrichtung zur Konfiguration von Fahrdynamikwerten an Bord eines Kraftfahrzeugs; und
- Fig. 3: einen Ablaufplan eines Verfahrens zur Konfiguration von Fahrdynamikwerten eines Kraftfahrzeugs
darstellt.

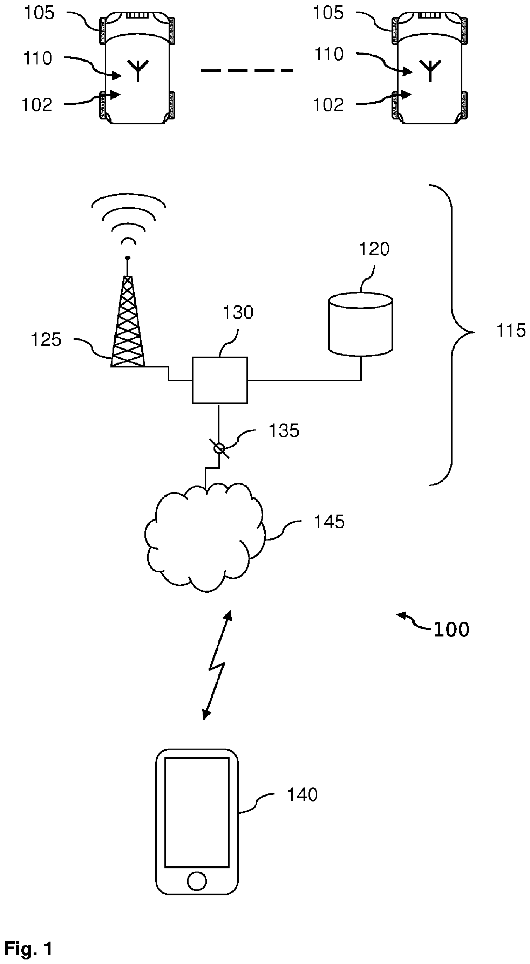

Figur 1 zeigt ein System 100 zur Konfiguration von Parametern einer Fahrverhaltenssteuerung 102 an Bord eines Kraftfahrzeugs 105. Es sind mehrere Kraftfahrzeuge 105 dargestellt, da das System 100 flexibel zur Konfiguration eines oder auch mehrerer Kraftfahrzeuge 105 eingesetzt werden kann. Das System 100 umfasst eine Vorrichtung 110 an Bord des Kraftfahrzeugs 105 und eine zentrale Komponente 115, die auch als Server bezeichnet werden kann. Die zentrale Komponente 115 kann in bekannter Weise auch mehrfach bzw. verteilt aufgebaut sein und umfasst wenigstens eine Speichereinrichtung 120 und eine Kommunikationseinrichtung 125. Üblicherweise ist eine Verarbeitungseinrichtung 130 vorgesehen, um den Kommunikationsfluss zwischen der Speichereinrichtung 120 und der Kommunikationseinrichtung 125 zu koordinieren. Die Kommunikationseinrichtung 125 kann beispielsweise als Schnittstelle in ein bevorzugterweise drahtloses Netzwerk realisiert sein und ist dazu eingerichtet, Informationen mit dem Kraftfahrzeug 105 auszutauschen. Das drahtlose Netzwerk kann beispielsweise mittels WLAN-, Bluetooth- oder mittels eines Mobilfunknetzes ausgeführt sein.

Optional umfasst die zentrale Komponente 115 noch eine weitere Kommunikationseinrichtung 135, die insbesondere dazu eingerichtet ist, eine Kommunikation der zentralen Komponente 115 mit einem Endgerät 140 zu ermöglichen, das beispielsweise einen Heimcomputer oder ein mobiles Telefon ("Smartphone") umfassen kann. Die Kommunikation zwischen dem Endgerät 140 und der zentralen Komponente 115 über die weitere Kommunikationseinrichtung 135 kann insbesondere über ein drahtloses oder drahtgebundenes Netzwerk 145 erfolgen, das das Internet oder ein Mobilfunknetz umfassen kann.

Seitens der zentralen Komponente 115 sind eine oder mehrere Konfigurationen bereitgestellt, die beispielsweise gesteuert durch einen Benutzer mittels des Endgeräts 140 angelegt, bearbeitet, gelöscht, kombiniert oder anderswie bearbeitet werden können. Eine oder mehrere Konfigurationen können an das Kraftfahrzeug 105 übermittelt und dort aktiviert werden. Eine Konfiguration umfasst wenigstens einen Parameter, der beim Aktivieren der Konfiguration an Bord des Kraftfahrzeugs 105 eingestellt wird und eine Fahrdynamik des Kraftfahrzeugs 105 betrifft bzw. beeinflusst.

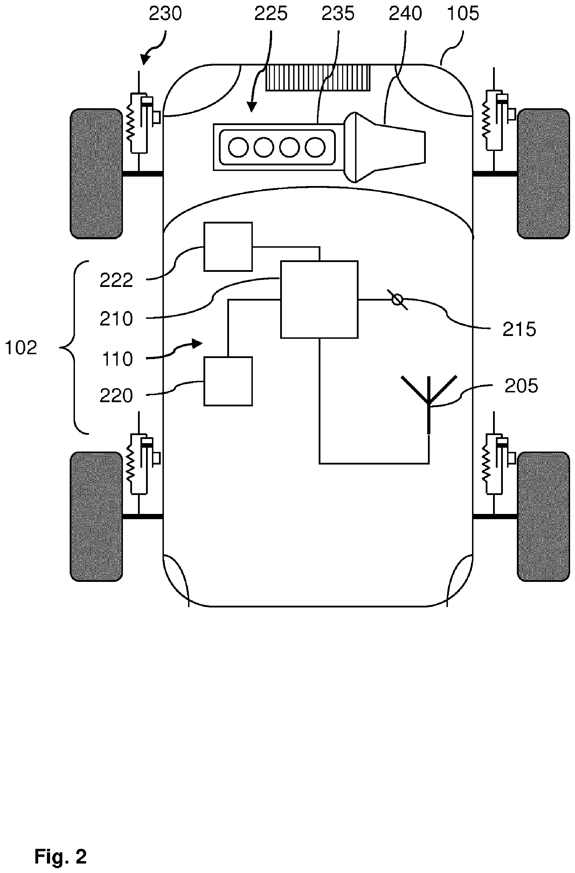

Figur 2 zeigt eine Ausführungsform einer Vorrichtung 110 an Bord eines Kraftfahrzeugs 105 für das System 100 nach Figur 1. Die Vorrichtung 110 umfasst eine Kommunikationseinrichtung 205 zum Austauschen von Informationen mit der Kommunikationseinrichtung 125 der zentralen Einrichtung 115 und eine Verarbeitungseinrichtung 210, die mit der Kommunikationseinrichtung 205 verbunden ist. Bevorzugterweise ist eine Schnittstelle 215 vorgesehen, über die die Verarbeitungseinrichtung 210 mit einem oder mehreren Steuergeräten oder Steuerelementen an Bord des Kraftfahrzeugs 105 kommunizieren kann, die die Fahrdynamik des Kraftfahrzeugs 105 beeinflussen. Ferner ist eine optionale Eingabeeinrichtung 220 vorgesehen, um einen Wunsch einer Bedienperson an Bord des Kraftfahrzeugs 105 abzutasten. Die Eingabeeinrichtung 220 kann auch eine Ausgabeeinrichtung umfassen, um einen Benutzerdialog mit der Person, insbesondere dem Fahrer des Kraftfahrzeugs 105, durchzuführen. Die Fahrverhaltenssteuerung 102 kann mittels eigenen Komponenten aufgebaut oder mit Teilen der Vorrichtung 110 integriert ausgeführt sein. Dabei kann die Verarbeitungseinrichtung 210 insbesondere einen programmierbaren Mikrocomputer umfassen und die Fahrverhaltenssteuerung 102 kann ein darauf ausführbares Programm umfassen. In einigen Ausführungsformen kann die Fahrverhaltenssteuerung 102 auch die Schnittstelle 215, die Eingabeeinrichtung 220 oder die Ausgabeeinrichtung 222 mitbenutzen.

Die Führung des Kraftfahrzeugs 105 kann beeinflusst werden durch einen Antriebsstrang 225, ein Fahrwerk 230 und gegebenenfalls noch weitere Systeme oder Komponenten, etwa ein Lenksystem. Der Antriebsstrang 225 umfasst in der vorliegenden, schematischen Darstellung einen Antriebsmotor 235 und ein Getriebe 240. Das Fahrwerk 230 umfasst in der vorliegenden, beispielhaften Ausführungsform ein Feder-Dämpfer-System 245 zur Aufhängung eines Rads an einer Karosserie des Kraftfahrzeugs 105. Weitere oder andere Elemente der exemplarisch gewählten Einrichtungen zur Fahrdynamiksteuerung sind ebenfalls möglich. Die Fahrdynamik des Kraftfahrzeugs 105 kann durch mindestens einen Parameter bestimmt werden, der beispielsweise die Funktionsweise des Antriebsstrangs 225 oder des Fahrwerks 230 verändert. Die Fahrverhaltenssteuerung 102 erfüllt eine Funktion bei der Steuerung der Bewegung des Kraftfahrzeugs 105 (Fahrdynamiksteuerung) oder bei der Unterstützung der Führung des Kraftfahrzeugs 105 durch einen Fahrer (Fahrassistent). Dabei kann die Fahrverhaltenssteuerung 102 den Fahrer unterstützen oder teilweise oder ganz ersetzen. Beispiele für Fahrverhaltenssteuerungen 102 umfassen einen Geschwindigkeitsassistenten (ACC), optional mit Abstandseinhaltung zu einem vorausfahrenden Kraftfahrzeug, einen Spurhalteassistenten oder einen Bremsassistenten. Die Fahrverhaltenssteuerung 102 kann in wenigstens einem Aspekt seiner Funktion mittels eines Parameters beeinflusst werden. Beispielsweise können im Fall eines ACC mit Abstandshaltung der einzuhaltende Abstand oder eine Annäherungsgeschwindigkeit an ein langsameres Kraftfahrzeug in vorbestimmten Bereichen wählbar sein.

Es wird vorgeschlagen, dass eine Konfiguration, die einen oder mehrere Parameter der Fahrverhaltenssteuerung 102 des Kraftfahrzeugs 105 umfassen kann, über die Kommunikationseinrichtung 205 empfangen wird und dass die Konfiguration - gegebenenfalls nach Freigabe durch eine Bedienperson mittels der Eingabeeinrichtung 220 - aktiviert wird, indem wenigstens einer der in der Konfiguration enthaltenen Parameter am Kraftfahrzeug 105 eingestellt wird. Die Konfiguration kann also unabhängig vom Kraftfahrzeug 105 erstellt werden, wie oben mit Bezug auf Figur 1 beschrieben ist, um dann bedarfsgerecht an das Kraftfahrzeug 105 übertragen und dort aktiviert zu werden. Die Abstimmung der Fahrverhaltenssteuerung 102 kann dadurch deutlich flexibler und freier gestaltet werden als im Stand der Technik bekannt ist.

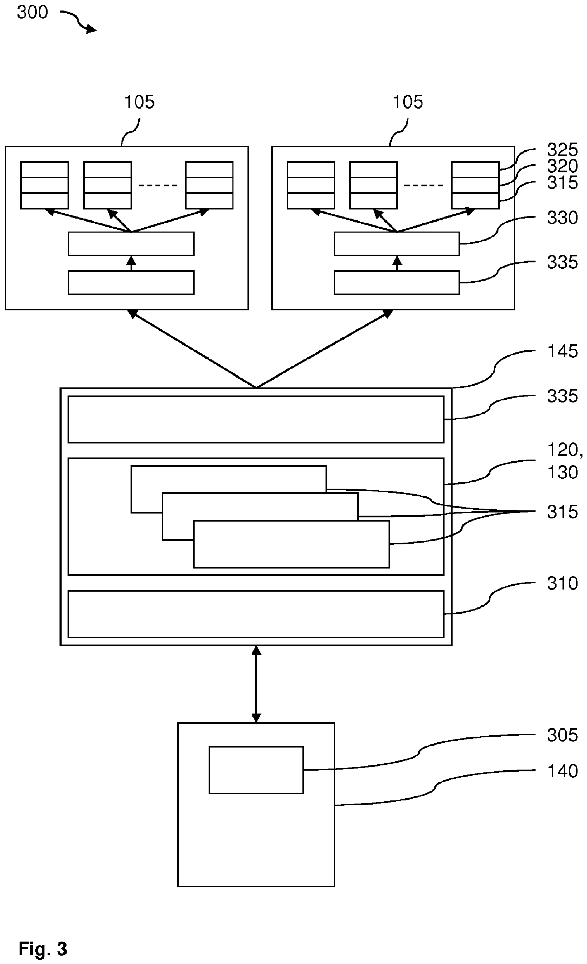

Figur 3 zeigt ein schematisches Ablaufdiagramm eines Verfahrens 300 zur Konfiguration eines Kraftfahrzeugs 105 entsprechend dem der Figuren 1 oder 2. Nach dem Vorbild der systematischen Aufteilung von Figur 1 sind im oberen Bereich exemplarisch mehrere Kraftfahrzeuge 105 dargestellt, im mittleren Bereich die zentrale Komponente 115 und im unteren Bereich das Endgerät 140. In der dargestellten, exemplarischen Ausführungsform läuft auf dem Endgerät 140 eine Konfigurationsapplikation 305, die mit einer entsprechenden Applikationskomponente 310 seitens der zentralen Komponente 115 kommuniziert und bevorzugterweise das Anlegen, Löschen, Verändern, Kopieren oder Kombinieren einer oder mehrerer Konfigurationen 315 erlaubt. Die Konfigurationen 315 können durch die Verarbeitungseinrichtung 130 verarbeitet oder in der Speichereinrichtung 120 abgelegt werden. Eine Konfiguration 315 kann auch von dritter Seite bereitgestellt werden, beispielsweise einem Betreiber der zentralen Komponente 115.

Eine Konfiguration 315 wird dann an das Kraftfahrzeug 105 übermittelt und gegebenenfalls aktiviert.

Das Aktivieren kann automatisch oder durch eine Bedienperson an Bord des Kraftfahrzeugs 105 erfolgen. In einer Ausführungsform ist einer Konfiguration 315 eine Bedingung 320 zugeordnet, die an Bord des Kraftfahrzeugs 105 ausgewertet wird. Ist die Bedingung 320 erfüllt, so kann die Konfiguration 315 aktiviert werden. in einer Ausführungsform muss eine Bedienperson an Bord des Kraftfahrzeugs der Aktivierung noch zustimmen. Die Bedingung kann beispielsweise das Über- oder Unterschreiten eines vorbestimmten Schwellenwerts durch einen Parameter umfassen, etwa wenn das Kraftfahrzeug eine vorbestimmte Geschwindigkeit unter- oder überschreitet. Es können auch mehrere Teilbedingungen 320 bestimmt und logisch miteinander verknüpft werden, beispielsweise mittels Boole'scher Algebra (UND, ODER, NICHT). Sind mehrere Konfigurationen mit jeweils zugeordneten Bedingungen vorgesehen, kann die Fahrdynamik des Kraftfahrzeugs 105 automatisch mittels der Konfigurationen umgeschaltet werden, gegebenenfalls auch mehrfach während einer Fahrt.

Mehrere Teilbedingungen 320 können so miteinander logisch verknüpft werden, dass die dadurch gebildete Bedingung 320 einen gewissen Abstraktionsgrad erhält, durch den die Bedingung 320 durch den Fahrer leichter verstanden werden kann. Beispielsweise kann eine Bedingung "Glatteisgefahr" umfassen, dass sich eine Außentemperatur in einem vorbestimmten Bereich um 0° C befindet und gleichzeitig ein Niederschlag oder eine nasse Fahrbahn detektiert wird. Eine der Bedingung "Glatteisgefahr" zugeordnete Konfiguration 315 kann eine Begrenzung einer Geschwindigkeit des Kraftfahrzeugs 105, eine Begrenzung der durch einen Antriebsmotor bereitgestellten Antriebsleistung, einen maximalen Lenkwinkel oder eine maximale Lenkgeschwindigkeit umfassen.

Andere Bedingungen können beispielsweise eine "Arbeitsfahrt" umfassen, wenn das Kraftfahrzeug 105 innerhalb eines vorbestimmten Zeitkorridors auf ein vorbestimmtes Ziel oder einer vorbestimmten Strecke bewegt wird, oder eine "Freizeitfahrt", wenn am Wochenende eine vorbestimmte Straßenklasse mit vorbestimmter Geschwindigkeit benutzt wird.

Eine oder mehrere solche Bedingungen können seitens der zentralen Stelle 115 vordefiniert sein, um die Definition einer damit verknüpften Konfiguration zu erleichtern. Ist wenigstens eine der Bedingungen, die zur Aktivierung einer Konfiguration 315 geführt haben, nicht mehr erfüllt, so kann eine zuvor aktivierte Konfiguration 315 reaktiviert werden. In einer anderen Ausführungsform kann in diesem Fall auch eine Standard-Konfiguration 315 aktiviert werden.

In einer Ausführungsform können auch mehrere Konfigurationen 315 gleichzeitig aktiviert werden. Dabei können jedoch Kollisionen entstehen, wenn zwei Konfigurationen 315 auf den gleichen Parameter zur Steuerung der Fahrdynamik des Kraftfahrzeugs 105 in unterschiedlicher Weise Einfluss zu nehmen versuchen. Zur Auflösung solcher Konflikte kann jeder Konfiguration 315 eine Priorität 325 zugeordnet sein, wobei die Priorität 325 beispielsweise durch einen Benutzer bei der Manipulation der Konfiguration 315 auf der zentralen Komponente 115 eingestellt worden sein kann. Eine automatische Zuweisung einer Priorität 325 ist ebenfalls möglich. Erfolgt ein konkurrierender Zugriff zweier Konfigurationen 315 auf den gleichen Parameter, so hat die Konfiguration 315 mit der höheren Priorität Vorrang.

Tabelle 1 zeigt unterschiedliche Möglichkeiten der prioritätsbasierten Konfliktauflösung.

**(Tabelle 1)**

| Parameter | 1 | 2 | 3 |
|---|---|---|---|
| Werte vor Änderung der Konfiguration | 1 | 1 | 1 |
| Konfiguration mit Priorität 2 | 3 | 2 | |
| Konfiguration mit Priorität 1 | | 4 | 3 |
| Werte nach Änderung (konfigurationsbasiert) | 3 | 2 | 1 |
| Werte nach Änderung (parameterbasiert) | 3 | 2 | 3 |

Es sind exemplarisch drei Parameter vorgesehen, die zunächst jeweils den Wert 1 tragen. Eine erste Konfiguration 315 mit einer hohen Priorität 325 versucht, die Parameter 1 und 2 zu ändern, während eine zweite Konfiguration 315 mit niedriger Priorität 325 versucht, die Parameter 2 und 3 zu ändern. In einer ersten Variante erfolgt die Konfliktauflösung konfigurationsbasiert, das heißt, nur die Konfiguration 315 mit der höheren Priorität 325 wird übernommen und die andere Konfiguration 315 wird verworfen. In einer zweiten Variante erfolgt eine parameterbasierte Konfliktauflösung, in der ebenfalls zuerst die Änderungen der Konfiguration 315 mit der höheren Priorität 325 durchgeführt werden, anschließend jedoch solche Parameter, die durch diese Konfiguration 315 nicht verändert werden sollten (im vorliegenden Beispiel der Parameter 3) auf der Basis der unterlegenen Konfiguration 315 verändert werden können, falls eine entsprechende Regel vorliegt. Werte der Parameter für die beiden Kollisionsauflösungen im gegebenen Beispiel sind in den unteren beiden Zeilen von Tabelle 1 ausgeführt. Eine Funktionskomponente, die das regelbasierte Verarbeiten der Konfigurationen 315 und Bedingungen 320 durchführt, kann als intelligente regelbasierte Funktionskomponente 330 ("Intelligent Rule Engine") beschrieben werden.

In noch einer weiteren Ausführungsform erfasst die Funktionskomponente 330 auch, unter welchen Bedingungen 320 eine Konfiguration 315 üblicherweise durch eine Bedienperson an Bord des Kraftfahrzeugs 105 aktiviert wird. Eine oder mehrere Bedingungen 320, unter denen die Aktivierung einer vorbestimmten Konfiguration 315 beobachtet wurde, können gespeichert und der Konfiguration 315 zugeordnet werden. Die abgespeicherten Zusammenhänge können beispielsweise statistisch ausgewertet werden, um eine Signifikanz zu erhöhen. Eine Aktivierung dieser Konfiguration 315 kann anschließend bei Vorliegen gleicher, ähnlicher oder entsprechender Bedingungen 320 an Bord des Kraftfahrzeugs 105 vorgeschlagen werden. In einer weiteren Ausführungsform kann die Aktivierung dieser Konfiguration 315 auch automatisiert erfolgen.

In noch einer weiteren Ausführungsform ist eine Funktionskomponente 335 ("Constraint Engine") zur Verarbeitung von Einschränkungen vorgesehen. Die Funktionskomponente 335 kann alternativ an Bord des Kraftfahrzeugs 105 oder seitens der zentralen Komponente 115 implementiert sein. Die Funktionskomponente 335 kann insbesondere dazu eingerichtet sein, eine Konfiguration 315, die beispielsweise von der zentralen Komponente 115 empfangen wurde, an ein Kraftfahrzeug 105 oder seine Betriebsbedingungen anzupassen. Beispielsweise kann so die Veränderung eines Parameters, der an Bord des Kraftfahrzeugs 105 nicht veränderbar ist, verhindert werden. Diese Einschränkung kann beispielsweise auf der Basis einer Ausstattung des Kraftfahrzeugs 105 bestimmt werden.

Die Funktionskomponente 335 kann auch dazu eingerichtet sein, eine Konfiguration 315 auf der Basis einer vorbestimmten Berechtigung einzuschränken. Beispielsweise kann das Verändern vorbestimmter Parameter generell oder außerhalb vorbestimmter Grenzen nicht erlaubt sein. Diese Erlaubnis kann beispielsweise von einem Servicepersonal, einem Betreiber der zentralen Einrichtung 115, einem Hersteller des Kraftfahrzeugs 105 oder einem Benutzer bei der Bearbeitung einer Konfiguration 315 getroffen sein. Ferner kann eine Konsistenzprüfung durchgeführt werden, die Abhängigkeiten zwischen Parametern überprüft. Beispielsweise kann so verhindert werden, dass das Antriebssystem sehr sportlich betrieben wird, während das Fahrwerk besonders komfortabel abgestimmt ist.

Tabelle 2 zeigt ein Beispiel für eine Beschränkung einer Konfiguration 315 auf der Basis einer Berechtigung und einer Ausstattung, wobei exemplarisch eine Berechtigung von "1" für eine Erlaubnis und eine Berechtigung von "0" für ein Verbot steht.

**(Tabelle 2)**

| Parameter | 1 | 2 | 3 | 4 | 5 |
|---|---|---|---|---|---|
| Werte vor Konfiguration | 1 | 1 | 1 | 1 | |
| Berechtigung | 1 | 1 | 1 | 0 | |
| Konfiguration | | 2 | 3 | 4 | 5 |
| Werte nach Konfiguration | 1 | 2 | 3 | 1 | |

Von fünf möglichen Parametern sind an Bord des beispielhaft betrachteten Kraftfahrzeugs 105 nur die Parameter 1 bis 4 vorgesehen, der fünfte Parameter ist nicht verfügbar, beispielsweise weil eine betroffene Komponente nicht von der Ausstattungsvariante des Kraftfahrzeugs 105 umfasst ist. Eine beispielhafte Berechtigung erlaubt außerdem nur das Ändern der Parameter 1 bis 3, nicht jedoch des Parameters 4.

Eine beispielhafte Konfiguration 315 versucht nun, die Parameter 2 bis 5 zu ändern, wobei die Einschränkungs-Funktionskomponente 335 darüber wacht, dass nur zulässige Änderungen durchgeführt werden. Im vorliegenden Beispiel ist die Änderung des vierten Parameters mangels Berechtigung nicht erlaubt, sodass der ursprünglich eingestellte Wert erhalten bleibt. Der fünfte Parameter kann mangels Implementation im Kraftfahrzeug 105 ebenfalls nicht verändert werden. Die Parameterwerte nach der Kontrolle durch die Funktionskomponente 335 im gewählten Beispiel sind in der letzten Zeile der Tabelle 2 angegeben.

Nicht separat in Figur 3 dargestellt sind Authentifikationen, die zur Sicherstellung der Kommunikation zwischen dem Endgerät 140 und der zentralen Einrichtung 115 einerseits und zwischen der zentralen Einrichtung 115 und dem Kraftfahrzeug 105 andererseits erforderlich sind. Durch solche Authentifikationen kann sicher gestellt werden, dass der jeweils andere Kommunikationspartner der ist, für den er sich ausgibt, dass eine Nachricht nicht verfälscht oder mitgehört werden kann oder dass eine bestimmte Berechtigung zur Erlangung oder Änderung von Informationen vorliegt. Unabhängig von zu den zwischen den Einrichtungen 140 und 115 verwendeten Authentifikationen kann es erforderlich sein, dass sich ein Benutzer gegenüber der Konfigurationsapplikation 305, dem Endgerät 140, der Verarbeitungseinrichtung 130 oder dem Kraftfahrzeug 105 identifiziert. In unterschiedlichen Ausführungsformen kann hierzu beispielsweise ein Passwort oder eine geheime Nummer eingegeben werden oder es kann kryptographischer Schlüssel mittels eines physischen Geräts erzeugt und durch den Benutzer eingegeben werden. Die Kommunikation zwischen den Komponenten 105, 115 und 140 erfolgt bevorzugterweise verschlüsselt und authentifiziert, beispielsweise auf der Basis eines zertifikatsbasierten Verschlüsselungssystems.

### Bezugszeichenliste

- 100: System
- 102: Fahrverhaltenssteuerung
- 105: Kraftfahrzeug
- 110: Vorrichtung
- 115: zentrale Komponente
- 120: Speichereinrichtung
- 125: Kommunikationseinrichtung
- 130: Verarbeitungseinrichtung
- 135: weitere Kommunikationseinrichtung
- 140: Endgerät
- 145: Netzwerk

- 205: Kommunikationseinrichtung
- 210: Verarbeitungseinrichtung
- 215: Schnittstelle
- 220: Eingabeeinrichtung
- 222: Ausgabeeinrichtung
- 225: Antriebsstrang
- 230: Fahrwerk
- 235: Antriebsmotor
- 240: Getriebe
- 245: Feder-Dämpfer-System

- 300: Verfahren
- 305: Konfigurations-Applikation
- 310: Applikationskomponente
- 315: Konfiguration
- 320: Bedingung
- 325: Priorität
- 330: Intelligente Regelbasierte Funktionskomponente
- 335: Einschränkungs-Funktionskomponente

## Patentansprüche

1. Vorrichtung (100) zur Konfiguration (315) eines Kraftfahrzeugs (105), umfassend:
- eine Kommunikationseinrichtung (205) zum Empfangen einer Konfiguration (315) die von außerhalb des Kraftfahrzeugs von einer zentralen Komponente (115) empfangen wird;
- wobei die Konfiguration (315) wenigstens einen Parameter umfasst, der auf eine Fahrverhaltenssteuerung (102) des Kraftfahrzeugs (105) bezogen ist; und
- eine Verarbeitungseinrichtung (210), die dazu eingerichtet ist, die Konfiguration (315) durch Einstellen wenigstens eines Parameters der Konfiguration (315) am Kraftfahrzeug (105) zu aktivieren,
wobei mehrere Konfigurationen (315) vorgesehen sind, denen jeweils eine Bedingung (320) zugeordnet ist, und die Verarbeitungseinrichtung (210) dazu eingerichtet ist, eine Konfiguration (315) mit erfüllter Bedingung (320) zu aktivieren und mehrere Konfigurationen (315) mit jeweils erfüllter Bedingung (320) zu aktivieren,
**dadurch gekennzeichnet, dass**
jeder Konfiguration (315) eine Priorität (325) zugeordnet ist und die Verarbeitungseinrichtung (210) dazu eingerichtet ist, die Aktivierung der Konfigurationen (315) auf der Basis der Priorität (325) durchzuführen.

2. Vorrichtung (100) nach Anspruch 1, wobei die Fahrverhaltenssteuerung (102) eine Fahrdynamiksteuerung des Kraftfahrzeugs (105) umfasst.

3. Vorrichtung (100) nach Anspruch 1, wobei die Bedingung (320) eine logische Verknüpfung mehrerer Teilbedingungen (320) umfasst.

4. Vorrichtung (100) nach einem der vorangehenden Ansprüche, wobei die Verarbeitungseinrichtung (210) dazu eingerichtet ist, einen Fahrzustand des Kraftfahrzeugs (105) abzutasten, eine Korrelation zwischen dem Fahrzustand und einer aktivierten Konfiguration (315) zu erfassen und das Aktivieren der Konfiguration (315) bei Vorliegen eines vergleichbaren Fahrzustands zu ermöglichen.

5. System (100), umfassend eine Vorrichtung (100) nach einem der vorangehenden Ansprüche und eine zentrale Komponente mit:
- einer Speichereinrichtung (120) zur Ablage von Konfigurationen (315) für das Kraftfahrzeug (105); und
- einer Kommunikationseinrichtung (125) zur Kommunikation mit dem Kraftfahrzeug (105).

6. System (100) nach Anspruch 5, wobei die zentrale Einrichtung (115) eine weitere Kommunikationseinrichtung (135) umfasst und dazu eingerichtet ist, auf der Basis von mittels der weiteren Kommunikationseinrichtung (135) empfangenen Eingaben eine abgelegte Konfiguration (315) zu erstellen oder zu verändern.

7. System (100) nach einem der Ansprüche 5 oder 6, wobei die Verarbeitungseinrichtung (210) oder die zentrale Komponente (115) dazu eingerichtet ist, eine Anpassung einer zu aktivierenden Konfiguration (315) an eine Fähigkeit des Kraftfahrzeugs (105) oder an eine Berechtigung eines Benutzers durchzuführen.

8. Verfahren zum Konfigurieren eines Kraftfahrzeugs (105), folgende Schritte umfassend:
- Übertragen einer Konfiguration (315) von einer zentralen Komponente von außerhalb des Kraftfahrzeugs auf das Kraftfahrzeug (105),
- wobei die Konfiguration (315) wenigstens einen Parameter umfasst, der auf eine Fahrverhaltenssteuerung (102) des Kraftfahrzeugs (105) bezogen ist; und
- Aktivieren der Konfiguration (315) durch Einstellen wenigstens eines Parameters der Konfiguration (315) im Kraftfahrzeug (105),
wobei mehrere Konfigurationen (315) vorgesehen sind, denen jeweils eine Bedingung (320) zugeordnet ist, wobei das Verfahren weiterhin die Schritte umfasst,
eine Konfiguration (315) mit erfüllter Bedingung (320) zu aktivieren und mehrere Konfigurationen (315) mit jeweils erfüllter Bedingung (320) zu aktivieren,
**dadurch gekennzeichnet, dass**
jeder Konfiguration (315) eine Priorität (325) zugeordnet ist und dass die Aktivierung der Konfigurationen (315) auf der Basis der Priorität (325) durchgeführt wird.

## Claims

1. Apparatus (100) for the configuration (315) of a motor vehicle (105), comprising:
- a communication device (205) for receiving a configuration (315) that is received from outside the motor vehicle from a central component (115);
- the configuration (315) comprising at least one parameter that is based on a driving behaviour controller (102) of the motor vehicle (105); and
- a processing device (210) that is set up to activate the configuration (315) by setting at least one parameter of the configuration (315) on the motor vehicle (105),
there being provision for multiple configurations (315), each of which has an associated condition (320), and the processing device (210) being set up to activate a configuration (315) with the condition (320) met and to activate multiple configurations (315) each with the condition (320) met,
**characterized in that**
each configuration (315) has an associated priority (325) and the processing device (210) is set up to carry out the activation of the configurations (315) on the basis of the priority (325).

2. Apparatus (100) according to Claim 1, wherein the driving behavior controller (102) comprises a driving dynamics controller of the motor vehicle (105).

3. Apparatus (100) according to Claim 1, wherein the condition (320) comprises a logic function for multiple subconditions (320).

4. Apparatus (100) according to one of the preceding claims, wherein the processing device (210) is set up to sense a driving state of the motor vehicle (105), to detect a correlation between the driving state and an activated configuration (315) and to facilitate the activation of the configuration (315) if a comparable driving state exists.

5. System (100), comprising an apparatus (100) according to one of the preceding claims and a central component having:
- a storage device (120) for storing configurations (315) for the motor vehicle (105); and
- a communication device (125) for communicating with the motor vehicle (105).

6. System (100) according to Claim 5, wherein the central device (115) comprises a further communication device (135) and is set up to take inputs received by means of the further communication device (135) as a basis for creating or changing a stored configuration (315) .

7. System (100) according to either of Claims 5 and 6, wherein the processing device (210) or the central component (115) is set up to carry out adaptation of an activable configuration (315) to suit a capability of the motor vehicle (105) or to suit a permission of a user.

8. Method for configuring a motor vehicle (105), comprising the following steps:
- transmitting a configuration (315) from a central component from outside the motor vehicle to the motor vehicle (105),
- the configuration (315) comprising at least one parameter that is based on a driving behaviour controller (102) of the motor vehicle (105); and
- activating the configuration (315) by setting at least one parameter of the configuration (315) in the motor vehicle (105),
there being provision for multiple configurations (315), each of which has an associated condition (320), wherein the method furthermore comprises the steps of:
activating a configuration (315) with the condition (320) met and activating multiple configurations (315) each with the condition (320) met,
**characterized in that**
each configuration (315) has an associated priority (325) and **in that** the activation of the configurations (315) is carried out on the basis of the priority (325) .

## Revendications

1. Arrangement (100) pour la configuration (315) d'un véhicule automobile (105), comprenant :
- un dispositif de communication (205) destiné à recevoir une configuration (315) qui est reçue depuis l'extérieur du véhicule automobile par un composant central (115) ;
- la configuration (315) comportant au moins un paramètre qui se réfère à une commande de comportement routier (102) du véhicule automobile (105) ; et
- un dispositif de traitement (210), qui est conçu pour activer la configuration (315) sur le véhicule automobile (105) par réglage d'au moins un paramètre de la configuration (315), plusieurs configurations (315) étant présentes, auxquelles est respectivement associée une condition (320), et le dispositif de traitement (210) étant conçu pour activer une configuration (315) dont la condition (320) est remplie et pour activer plusieurs configurations (315) dont la condition (320) est respectivement remplie,
**caractérisé en ce que**
une priorité (325) est associée à chaque configuration (315) et le dispositif de traitement (210) est conçu pour effectuer l'activation des configurations (315) sur la base de la priorité (325).

2. Arrangement (100) selon la revendication 1, la commande de comportement routier (102) comprenant une commande de dynamique de conduite du véhicule automobile (105) .

3. Arrangement (100) selon la revendication 1, la condition (320) comprenant une combinaison logique de plusieurs conditions partielles (320).

4. Arrangement (100) selon l'une des revendications précédentes, le dispositif de traitement (210) étant conçu pour échantillonner un état de conduite du véhicule automobile (105), acquérir une corrélation entre l'état de conduite et une configuration (315) activée et rendre possible l'activation de la configuration (315) en présence d'un état de conduite comparable.

5. Système (100), comportant un arrangement (100) selon l'une des revendications précédentes et un composant central comprenant :
- un dispositif de mémoire (120) destiné au stockage de configurations (315) pour le véhicule automobile (105) ; et
- un dispositif de communication (125) servant à la communication avec le véhicule automobile (105).

6. Système (100) selon la revendication 5, le dispositif central (115) comportant un dispositif de communication supplémentaire (135) et étant conçu pour établir ou pour modifier une configuration (315) stockée sur la base de saisies reçues au moyen du dispositif de communication supplémentaire (135).

7. Système (100) selon l'une des revendications 5 ou 6, le dispositif de traitement (210) ou le composant central (115) étant conçu pour effectuer une adaptation d'une configuration (315) à activer à une capacité du véhicule automobile (105) ou à une autorisation d'un utilisateur.

8. Procédé de configuration d'un véhicule automobile (105), comprenant les étapes suivantes :
- transmission d'une configuration (315) par un composant central depuis l'extérieur du véhicule automobile sur le véhicule automobile (105),
- la configuration (315) comportant au moins un paramètre qui se réfère à une commande de comportement routier (102) du véhicule automobile (105) ; et
- activation de la configuration (315) par réglage d'au moins un paramètre de la configuration (315) dans le véhicule automobile (105), plusieurs configurations (315) étant présentes, auxquelles est respectivement associée une condition (320), le procédé comprenant en outre les étapes d'activation d'une configuration (315) dont la condition (320) est remplie et d'activation de plusieurs configurations (315) dont la condition (320) est respectivement remplie,
**caractérisé en ce que**
une priorité (325) est associée à chaque configuration (315) et **en ce que** l'activation des configurations (315) est effectuée sur la base de la priorité (325).
